# EUROPÄISCHE PATENTSCHRIFT

(11) **EP 3 320 796 B1**
(45) Veröffentlichungstag und Bekanntmachung des Hinweises auf die Patenterteilung: **03.03.2021**
(21) Anmeldenummer: 16198343.2
(22) Anmeldetag: 11.11.2016
(51) Int. Cl.: A43B 5/04, B33Y 80/00

(54) **INNENSCHUH, SCHUH UND VERFAHREN ZUR HERSTELLUNG EINES SKISCHUHS**
INNER SHOE, SHOE AND METHOD FOR PRODUCING A SKI BOOT
CHAUSSURE INTERNE, CHAUSSURE ET PROCÉDÉ DE FABRICATION D'UNE CHAUSSURE DE SKI

(43) Veröffentlichungstag der Anmeldung: 16.05.2018
(73) Patentinhaber: SCOTT Sports SA, 1762 Givisiez (CH)
(72) Erfinder: Rindlisbacher, Reto, 6048 Horw (CH); Schmitt, Benjamin, 6000 Luzern (CH)
(74) Vertreter: Keller Schneider Patent- und Markenanwälte AG (Bern)

(56) Entgegenhaltungen:
- EP-A1- 1 579 776
- EP-A1- 2 494 880
- WO-A1-2013/037924
- AT-U1- 14 717
- FR-A1- 2 738 999
- US-A- 5 005 303
- Olivier Van Herpt: "3D Printed Shoes - Olivier van Herpt", , 23 August 2014 (2014-08-23), XP055618149, Retrieved from the Internet: URL:http://oliviervanherpt.com/3d-printed- shoes/ [retrieved on 2019-09-04]

## Beschreibung

Die Erfindung betrifft einen Innenschuh, einen Schuh, sowie ein Verfahren zur Herstellung eines Innenschuhs gemäss dem Oberbegriff der unabhängigen Ansprüche.

Es ist bei Innenschuhen, insbesondere Ski-Innenschuhen bekannt, dass diese durch ihre Passform und die mechanischen Eigenschaften des Materials den Tragekomfort sowie die biomechanische Wirkung des Schuhes beeinflussen. Insbesondere ist bekannt, dass die Passform und die verwendeten Materialien zur Steigerung des Tragekomforts sowie der biomechanischen Effizienz optimiert werden.

Es ist bekannt, dass Ski-Innenschuhe zur Individualisierung und zur Steigerung des Tragekomforts mit Schaum an die Anatomie des Benutzers angepasst werden. Dazu werden Zwischenräume zwischen dem Ski-Innenschuh und dem Fuss und Unterschenkel mit einem schnellhärtenden Schaum ausgeschäumt.

Nachteilig ist dabei, dass das Verfahren aufwendig ist. Bis zu einer zufriedenstellenden Passform ist oftmals ein mehrmaliges Schäumen notwendig. Der Schaum ist weich, wodurch zwar der Tragekomfort erhöht, jedoch auch die Übertragung der Kraft auf den Ski verschlechtert wird.

Aus der AT 14717U ist ein weiterer individuell angepasster Skiinnenschuh bekannt. Der Skiinnenschuh wird durch ein 3D Druckverfahren hergestellt und kann somit auf den Fuss des Benutzers individuell angepasst werden. Das verwendete Material des Skiinnenschuhs kann verschiedene Härten aufweisen und so dem Geschlecht, Alter, der Konstitution und dem Fahrkönnen des Skischuhträgers angepasst werden. In einem ersten Schritt wird dazu mittels 3D-Scanner der Fuss und der Unterschenkel des zukünftigen Benutzers gescannt. Anschliessend wird der Skiinnenschuh gedruckt. In einem weiteren Schritt wird der Skiinnenschuh gescannt und eine entsprechende Aussenschale 3D gedruckt.

Aus FR 2738999 ist ein Innenschuh für einen Sport-Schalenschuh bekannt. Der Innenschuh besteht auf einem thermoformbaren Material. In gewissen Zonen, welche sensiblen Partien des Fusses entsprechen, weist der Innenschuh eine Anzahl von Löchern auf.

Aus der DE 102011011185 A1 ist beispielsweise die Herstellung von Skischuhen basierend auf 3D Fussdaten des zukünftigen Benutzers bekannt. Aus diesen Daten wird die geometrische Form wenigstens eines Abschnitts einer Aussenschale des Skischuhs bestimmt. Dieser Abschnitt der Aussenschale wird anschliessend in einem Rapid-Prototypen-Verfahren aus einem Kunststoff gefertigt. Aus den Aussenschuhdaten werden anschliessend Massangaben für den Innenschuh berechnet. Der Innenschuh wird nach diesen Massangaben gefertigt.

Nachteilig bei den bekannten Innenschuhen ist, dass die Materialeigenschaften des Innenschuhs für den gesamten Innenschuh gleich gewählt werden müssen. So wird an unnötigen Stellen Material mit einer hohen Festigkeit verwendet. Dies führt zu Druckstellen beim Tragen des Schuhs.

Es ist die Aufgabe der vorliegenden Erfindung, einen Innenschuh zu schaffen, welcher die Nachteile des Standes der Technik vermeidet und insbesondere einen Schuh und ein Verfahren zur Herstellung eines Skischuhs zu schaffen, bei dem die Materialeigenschaften des Innenschuhs so gewählt werden können, dass sowohl ein hoher Tragekomfort, als auch eine optimale biomechanische Wirkung resultieren.

Die Aufgabe wird durch einen Innenschuh, einen Schuh sowie durch ein Verfahren zur Herstellung eines Innenschuhs gemäss den unabhängigen Ansprüchen gelöst.

Erfindungsgemäss besteht der Innenschuh, insbesondere der Skischuh-Innenschuh wenigstens aus einem ersten Material. Der Innenschuh weist wenigstens eine erste Zone und wenigstens eine zweite Zone auf. Die erste Zone und die zweite Zone sind beide aus dem ersten Material gefertigt. Erfindungsgemäss ist die erste Zone und die zweite Zone mit einer unterschiedlichen Struktur aufgebaut.

In einem ersten Aspekt der Erfindung werden die unterschiedlichen Strukturen durch unterschiedliche Anordnung des Materials, insbesondere durch unterschiedliche geometrische Strukturen und unterschiedliche Hohlräume bewirkt.

In einem zweiten Aspekt der Erfindung werden die unterschiedlichen Strukturen durch eine punktuelle Härtung und die daraus resultierenden unterschiedlichen Molekularstrukturen des ersten Materials bewirkt. Insbesondere kann die Festigkeit der Struktur an einem bestimmten Punkt durch die Menge eines aufgebrachten Härters graduell einstellbar sein.

In einem dritten Aspekt der Erfindung werden die unterschiedlichen Strukturen durch eine Kombination des ersten Aspekt und des zweiten Aspekt bewirkt.

Vorteilhaft erweist sich, dass die erste Zone und die zweite Zone durch die unterschiedlichen Strukturen unterschiedliche mechanische Eigenschaften aufweisen. Durch die Wahl einer geeigneten Struktur kann so beispielsweise die Festigkeit der ersten Zone und der zweiten Zone unterschiedlich gewählt werden. Der Schuh kann so auf eine optimale biomechanische Wirkung hin optimiert werden. Weiter kann auch der Tragekomfort durch die Wahl der geeigneten Struktur in der geeigneten Zone verbessert werden.

In einer Ausführungsform weist der Innenschuh drei, vier, fünf, sechs, sieben oder mehr verschiedene Zonen mit verschiedenen Strukturen auf.

In einer bevorzugten Ausführungsform besteht der gesamte Innenschuh im Wesentlichen aus dem ersten Material.

Die Herstellung des gesamten Innenschuhs aus einem Material erlaubt eine einfache Fertigung. Insbesondere kann der Innenschuh so aus einem Stück gefertigt werden.

Die Nachteile der Verwendung eines einzigen Materials für den gesamten Innenschuh können durch die Ausprägung verschiedener Strukturen in den verscheiden Zonen kompensiert werden. In anderen Worten können unterschiedliche mechanische Eigenschaften im selben Material durch die Ausprägung von verschiedenen Strukturen bewirkt werden.

Dadurch hat man sowohl den Vorteil der vereinfachten Fertigung des gesamten Innenschuhs aus einem Material, wie auch den Vorteil von unterschiedlichen mechanischen Eigenschaften, insbesondere Festigkeiten in den verschiedenen Zonen des Innenschuhs.

Die Fertigung des gesamten Innenschuhs aus einem Material bezieht sich oben und im Folgenden auf die Fertigung des funktionellen, die Kraft von Fuss und Unterschenkel übertragenden Hauptteils des Innenschuhs aus diesem Material. Das Vorhandensein von Hilfsmaterial schliesst es nicht aus. Nicht ausgeschlossen ist insbesondere das Aufbringen eines Härters zur Ausbildung von unterschiedlichen Strukturen im Material nach dem zweiten Aspekt der Erfindung. Weiter ist auch das Beschichten des ersten Materials, beispielsweise zur Veredelung der Oberfläche nicht ausgeschlossen.

In einer bevorzugten Ausführungsform ist das erste Material ein Kunstharz oder ein Thermoplast, insbesondere ein Polyethylen, Polypropylen, Polyester, Polyactid, Acrylnitril-Butadien-StyrolCopolymerisat, Glykol modifiziertes PET oder ein thermoplastisches Elastomer, insbesondere eine Polyurethan oder ein Duroplast, insbesondere ein Silikon oder Photopolymer.

Im Sinne des ersten Aspekts der Erfindung erlaubt die Verwendung eines Elastomers, insbesondere die Verwendung von Polyurethan den Aufbau von unterschiedlichen geometrischen Strukturen. Beispielsweise wird dazu das Elastomer in Form eines Rasters aufgebracht. Je nach gewählter Rasterstruktur können so unterschiedliche geometrische Strukturen und insbesondere unterschiedliche Hohlräume bewirkt werden.

Im Sinne des zweiten Aspekts der Erfindung erlaubt die Verwendung eines Elastomers, insbesondere die Verwendung von Polyurethan die Ausprägung unterschiedlichster Molekularstrukturen durch das punktuelle Auftragen eines Härters. Dadurch können Variationen bezüglich der Härte des Materials erreicht werden.

In einer bevorzugten Ausführungsform ist die Struktur eine Waben-, Balken-, Gitter-, 3D Gitter-, trigonale, tetragonale oder kubische, sphärische oder asphärische Struktur oder eine Kombination davon. Unterschiedliche Festigkeiten lassen sich durch unterschiedliche Wahl der Grössen der Hohlräume und/oder Wandstärken der einzelnen Zellen bewirken.

In einer bevorzugten Ausführungsform weisen die erste Zone und die zweite Zone aufgrund der unterschiedlichen Strukturen unterschiedliche mechanische Festigkeiten auf.

Diese Strukturen erlauben die besonders einfach Ausprägung von verschiedenen mechanischen Eigenschaften im ersten Material.

So kann jede der Zonen mit der gewünschten Festigkeit ausgebildet werden. Hat beispielsweise die erste Zone direkten Einfluss auf die Kraftübertragung vom Fuss und/oder Unterschenkel auf die Umgebung, insbesondere auf den Ski, kann sie durch Ausprägung einer entsprechenden Struktur mit einer hohen Festigkeit, zum Beispiel durch kleine Volumen der Zellen und / oder dicke Wandstärken ausgeführt werden. Hat die zweite Zone beispielsweise keinen direkten Einfluss auf die Kraftübertragung des Fusses und/oder Unterschenkels auf die Umgebung, kann diese mit einer tiefen Festigkeit ausgeführt werden. So sind im Innenschuh unterschiedliche Festigkeiten möglich und so hohe biomechanische Effizienz und Tragekomfort im Innenschuh vereinbar.

Vorteilhaft erweist sich weiter, dass die Hohlräume die Isolationsfähigkeit des Innenschuhs verbessern und so den Tragekomfort erhöhen, sowie dass ein Innenschuh mit Hohlräumen besonders leicht ist.

In einer bevorzugten Ausführungsform verläuft die erste Zone im Bereich der Fusssohle. Die zweite Zone verläuft im Bereich eines Knöchels (Malleolus).

Die Zone im Bereich der Fusssohle ist direkt an der Kraftübertragung vom Fuss auf die Umgebung, insbesondere auf den Ski beteiligt. Die Zone im Bereich des Knöchels ist weniger stark an der Kraftübertragung auf die Umgebung beteiligt. Durch die Ausprägung einer festeren Struktur in der ersten Zone und die Ausprägung einer zweiten, weniger festen Struktur in der zweiten Zone, kann den unterschiedlichen Funktionen der Zonen trotz Verwendung des selben Materials Rechnung getragen werden.

Eine erste Gruppe von Zonen hat einen grösseren Einfluss auf die Kraftübertragung vom Fuss und/oder Unterschenkel des Benutzers auf die Umgebung, insbesondere auf den Ski. Diese Zonen sind vorteilhaft hart ausgebildet. Die Zughörigkeit einer Zone zu einer Gruppe kann sich insbesondere je nach Art der Verwendung (beispielsweise je nach Sportart) des Innenschuhs unterschieden. Beispielsweise können im Fall eines Skischuh-Innenschuhs die Zone im Bereich der Fusssohle und im Bereich des Fussgewölbes, sowie die Zonen seitlich entlang des Schienbeins zu der ersten Gruppe gehören und hart ausgeführt sein.

Eine zweite Gruppe von Zonen hat einen untergeordneten Einfluss auf die Kraftübertragung. Diese Zonen sind vorteilhaft weich ausbildet, um so den Tragekomfort des Schuhes zu erhöhen. Im Fall eine Skischuhs-Innenschuhs können insbesondere die Zonen im Bereich der Zehen, des Knöchels und des Fussrückens, sowie des Wadenbeins zur zweiten Gruppe gehören und weicher als die Zonen der ersten Gruppe ausgeführt sein.

Die Zonen in einer Gruppe können unterschiedliche Härten aufweisen.

Eine Zone der ersten Gruppe kann eine Härte von 35 bis 100 Shore A aufweisen. Insbesondere kann eine Zone im Bereich der Fusssohle eine Härte von 35 bis 100 Shore A aufweisen. Eine Zone der zweiten Gruppe kann eine Härte von 0 bis 35 Shore A aufweisen. Die Zone im Bereich des Knöchels kann eine Härte von 5 bis 35 Shore A aufweisen.

Insbesondere kann eine Zone im Bereich des Wadenbeins eine Härte von 25 bis 30 Shore A aufweisen. Eine Zone im Bereich der Zehen kann eine Härte von 20 bis 30 Shore A aufweisen. Eine Zone im Bereich des Fussrückens kann ebenfalls eine Härte von 20 bis 30 Shore A aufweisen. Eine Zone im Bereich der Fussgelenke kann ein Härte von 15-25 Shore A aufweisen.

In einer bevorzugten Ausführungsform ist die Struktur des ersten Materials in der ersten Zone und der zweiten Zone individuell wenigstens auf einen Benutzer angepasst.

Vorteilhaft erweist sich, dass sich so die mechanischen Eigenschaften nicht nur von Zone zu Zone unterscheiden, sondern diese auf das individuelle Bedürfnis des Benutzers angepasst werden können. So kann dem Fahrkönnen, dem gewünschten Komfortlevel, den bekannten Problemstellen und weiteren Faktoren Rechnung getragen werden.

In einer bevorzugten Ausführungsform weist der Innenschuh wenigstens eine Vertiefung auf einer Aussenseite auf. Die Vertiefung führt von einem Bereich des Fusses entlang des Schuhes in einen Bereich des Unterschenkels. Die Vertiefung mündet in wenigstens einem Belüftungsloch welches die innere Oberfläche des Innenschuhs durchdringt und die Vertiefung so mit einem Innenraum des Innenschuhs, welcher durch die Innenform des Innenschuhs gebildet wird, verbindet.

Vorteilhaft erweist sich, dass so eine Belüftung des Schuhs auf einfache Weise realisierbar ist. Feuchte Luft kann vom Inneren des Innenschuhs durch die Lüftungslöcher in die Vertiefung entweichen. Die Vertiefung bildet, alleine oder zusammen mit der Aussenschale einen Luftkanal, worin die Luft aufsteigt. Am Ende der Vertiefung wird die Luft an die Umgebung abgegeben.

In einer bevorzugten Ausführungsform umgibt der Innenschuh in einem Gebrauchszustand einen Teil eines Unterschenkels eines Benutzers.

In einer bevorzugten Ausführungsform ist die Innenform des Innenschuhs individuell und wenigstens auf einen Fuss, insbesondere auch auf einen Unterschenkel eines Benutzers angepasst.

Vorteilhaft erweist sich, dass dadurch eine optimale Passform des Innenschuhs erreicht wird. So wird die biomechanisch Effizienz der Kraftübertragung weiter gesteigert. Des Weiteren werden durch die auf den Fuss des Benutzers angepasste Innenform Druckstellen vermieden. Eigenheiten eines Fusses, wie beispielsweise unübliche Fussformen werden berücksichtigt und in die Innenform des Innenschuhs einfliessen. Des Weiteren ist es möglich Grössenunterschiede zwischen rechtem und linkem Fuss zu berücksichtigen.

Weiter wird durch die gute Passform die Blutzirkulation im Fuss und Unterschenkel nicht behindert, was zu wärmeren Füssen und so zu einem erhöhten Tragekomfort führt.

In einer weiteren Ausführungsform ist der Innenschuh derart ausgebildet, dass der Innenschuh die Funktion des gesamten Schuhs übernimmt und auch ohne Aussenschuh verwendet werden kann.

In einer bevorzugten Ausführungsform ist der Innenschuh beschichtet, so dass sich die innere Oberfläche des Schuhs weich, insbesondere wie Stoff anfühlt.

Zur Lösung der Aufgabe führt ebenfalls ein Schuh mit einem Innenschuh wie oben und im Folgenden beschrieben. Der Innenschuh ist in einem Gebrauchszustand von einem Aussenschuh umgeben. Eine Aussenform des Innenschuhs ist auf eine Innenform des Aussenschuhs passgenau abgestimmt. Diese Form kann standardmässig gleich gewählt werden unabhängig von der Innenform, das heisst der Form des Fusses und/oder Unterschenkels des Benutzers

Vorteilhaft erweist sich, dass sich so ein speziell guter Halt des Innenschuhs im Aussenschuhs ergibt. Dadurch werden Schliessmittel, wie beispielsweise Schnallen, nicht mehr oder wenigstens in einem geringeren Umfang benötigt. Des Weiteren ist der Schuh benutzerfreundlicher, da das Schliessen beziehungsweise Öffnen vieler Schnallen beim Anziehen / Ausziehen entfällt.

In einer bevorzugten Ausführungsform ist die Aussenform des Innenschuhs derart auf die Innenform des Aussenschuhs abgestimmt, dass diese Form weitgehend formschlüssig ineinander passen.

Vorteilhaft erweist sich, dass so eine Verschiebung des Innenschuhs im Aussenschuh minimiert wird. Des Weiteren erlaubt ein formschlüssiges Ineinanderpassen eine ideale Kraftübertragung vom Innenschuh auf den Aussenschuh. Dadurch wird die biomechanische Effizienz des Schuhs verbessert.

Zur Lösung der Aufgabe führt ebenfalls ein Schuh, insbesondere ein Skischuh, umfassend einen Aussenschuh und einen Innenschuh, insbesondere einen Innenschuh wie oben und im Folgenden beschrieben. Der Aussenschuh umfasst einen Deckel und eine Schale. Der Deckel ist formschlüssig in die Schale einsetzbar.

Vorteilhaft erweist sich, dass der Aussenschuh so zweiteilig ausgeführt ist und ein einfaches Einführen des Innenschuhs in den Aussenschuh ermöglicht. Die formschlüssige Verbindung zwischen der Schale und dem Deckel erlaubt einen guten Zusammenhalt der Aussenschale im Gebrauchszustand.

In einer bevorzugten Ausführungsform ist der Deckel in Form einer Schuhzunge ausgebildet. Der Deckel erstreckt sich in einem Gebrauchszustand über einen Bereich eines Fussrückens und eines Schienbeins eines Benutzers.

Vorteilhaft erweist sich, dass so der Deckel besonders einfach durch den Benutzer, welcher im Schuh steht, an die Schale anbringbar ist.

In einer bevorzugten Ausführungsform weist der Deckel eine Vertiefung auf. Die Vertiefung ist so ausgebildet, dass der Deckel durch die Vertiefung mit der Schale im Bereich der Fussspitze formschlüssig verbindbar ist und sich der Deckel im verbunden Zustand auch unter einer Krafteinwirkung vom Innenschuh in Richtung Aussenschuh nicht von der Schale löst.
So kann sich der Deckel, insbesondere bei einer im Gebrauch auftretenden Kraft vom Innenschuh in Richtung Aussenschuh nicht von der Schale lösen.

In einer besonders bevorzugten Ausführungsform weist die Schale im Bereich eines seitlichen Schafts auf der äusseren Oberfläche wenigstens eine Vertiefung, insbesondere eine Aussparung auf. In einem Verschlusszustand überlappt der Deckel die Schale jeweils seitlich insbesondere bis über die Vertiefung. Der Deckel weist wenigstens einen Vorsprung auf. Der Vorsprung passt formschlüssig in die Vertiefung. Der Vorsprung ist so im Deckel angeordnet, dass im Verschlusszustand der Vorsprung in die Vertiefung zu liegen kommt.

Durch das Einführen des Vorsprungs des Deckels in die Vertiefung der Schale entsteht eine Verbindung, insbesondere eine formschlüssige Verbindung. Diese Verbindung garantiert den Halt des Deckels in der Schale. Dadurch wird der Innenschuh im Aussenschuh fixiert. Die Verbindung durch eine Vertiefung und einen Vorsprung ist eine besonders einfache Art der Verbindung. Andere aufwendigere Verbindungsarten, wie beispielsweise Schnallen können so umgangen werden.

In einer alternativen Ausführungsform weist die Schale im Bereich eines seitlichen Schafts auf der äusseren Oberfläche wenigstens einen Vorsprung auf. In einem Verschlusszustand überlappt der Deckel die Schale jeweils seitlich insbesondere bis über den Vorsprung. Der Deckel weist wenigstens eine Vertiefung auf. Die Vertiefung passt formschlüssig auf den Vorsprung. Die Vertiefung ist so im Deckel angeordnet, dass im Verschlusszustand die Vertiefung auf den Vorsprung zu liegen kommt.

In einer bevorzugten Ausführungsform weist diese Vertiefung eine ovale, kreisrunde oder polygonale Form auf.

Eine solche Form erlaubt das einfache Verbinden des Vorsprungs mit der Vertiefung.

In einer bevorzugten Ausführungsform weist eine innere Oberfläche des Deckels wenigstens eine Vertiefung, insbesondere eine Aussparung auf. Die äussere Oberfläche des Innenschuhs weist an entsprechende Stelle einen Vorsprung auf. So kommt im Gebrauchszustand der Vorsprung in die Vertiefung zu liegen.

Vorteilhaft erweist sich, dass so eine weitere Verbindung zwischen Innenschuh und Aussenschuh entsteht. Diese weitere Verbindung stabilisiert den Innenschuh im Aussenschuh. Dadurch wird der Halt des Benutzers im Schuh weiter gestärkt. Insbesondere wird der Halt des Innenschuhs im Aussenschuh gestärkt.

In einer alternativen Ausführungsform weist eine innere Oberfläche des Deckels wenigstens einen Vorsprung auf. Die äussere Oberfläche des Innenschuhs weist an entsprechende Stelle eine Vertiefung, insbesondere eine Aussparung auf. So kommt im Gebrauchszustand der Vorsprung in die Vertiefung zu liegen.

In einer Ausführungsform weisen die Vertiefungen beziehungsweise Vorsprünge Tiefen respektive Höhen von 1 Millimeter bis 10 Millimeter auf.

In einer bevorzugten Ausführungsform ist der Deckel mit dem Innenschuh mit einer formschlüssigen Verbindung verbindbar. Die Aussparung des Deckels kann dazu mit dem Vorsprung des Innenschuhs verbunden werden.

Der Deckel wird so zu einem Teil des Innenschuhs wird. Der Schuh wird so zweiteilig, wobei der erste Teil durch die Aussenschale gebildet wird und der zweite Teil durch den Innenschuh und den verbunden Deckel gebildet wird.

In einer bevorzugten Ausführungsform weist der Vorsprung der äusseren Oberfläche des Innenschuhs eine Hinterschneidung auf.

Der Deckel kann so mit seiner Aussparung in der Hinterschneidung eingeführt werden. Der Deckel kann so am Innenschuh befestigt werden.

In einer bevorzugten Ausführungsform ist ein Bereich des Innenschuhs, insbesondere eine Zone des Innenschuhs im Bereich des Fussrückens, ausschliesslich im Bereich der Fussspitze mit dem Rest des Innenschuhs verbunden.

Daraus ergibt sich ein Bereich, welcher als bewegliche Schuhzunge ein Stück weit vom restlichen Innenschuh wegbewegt werden kann. Diese Art der beweglichen Schuhzunge ermöglicht einen einfachen Ein- beziehungsweise Ausstieg aus dem Innenschuh und erhöht so die Benutzerfreundlichkeit des Schuhs.

Der Innenschuh wird in einem additiven Fertigungsverfahren gefertigt, wobei zwischen der Zone im Bereich des Fussrückens und dem restlichen Innenschuh - abgesehen von einer durchgehenden Verbindung im Bereich der Fussspitze - ein Abstand vorgesehen wird. Dieser Abstand kann beispielsweise zwischen 0.1 und 1mm breit sein.

In einer bevorzugten Ausführungsform, ist der Aussenschuh verschliessbar. In einer verschlossenen Position ist die Schale nicht vom Deckel lösbar.

Die Verschliessung des Aussenschuhs verhindert ein versehentliches Öffnen der Verbindung zwischen Schale und Deckel.

Alternativ zu einem solchen Verschlusskönnte der Deckel aus elastisch verformbarem Material gefertigt sein, so dass sich die Verbindung nur durch eine ausreichend grosse Kraft mittels Verformung des Deckels oder der Schale lösen lässt.

In einer besonders bevorzugten Ausführungsform umfasst der Aussenschuh wenigstens eine Verschlussöffnung zum Einführen eines Verschlussbands.

Die Verschlussöffnung erlaubt das Einführen eines Verschlussbands oder eines ähnlichen Verschlussmechanismus. Durch die Verschlussöffnung wird der Verschlussmechanismus in Position gehalten. Die Verschlussöffnung erlaubt so zusammen mit dem Verschlussmechanismus das sichere, feste Verschliessen des Deckels und der Schale des Aussenschuhs. Der Schuh kann so auch unter extremen Bedingungen eingesetzt werden. Insbesondere kann der Schuh so als Skischuh eingesetzt werden. Die Verwendung von Verschlussöffnung und Verschlussmechanismus ist eine besonders einfache Art, das Verschliessen zu bewirken.

Zur Lösung der Aufgabe führt ebenfalls ein Verfahren zur Herstellung eines Skischuhs, insbesondere eines Skischuhs wie oben und im Folgenden beschrieben, insbesondere eines Skischuhs-Innenschuhs wie oben und im Folgenden beschrieben. Das Verfahren erfasst die folgenden Schritte:
- Erfassung eines Modelles eines Fusses und /oder Unterschenkels eines Benutzers,
- Bestimmung einer ersten Struktur anhand des Modelles,
- Bestimmung wenigstens einer zweiten Struktur anhand des Modelles,
- Ausprägung der ersten Struktur in einer ersten Zone des Skischuhs durch Anordnung eines Materials mittels eines additiven Fertigungsverfahren,
- Ausprägung der zweiten Struktur in einer zweiten Zone des Skischuhs durch Anordnung des Materials mittels des additiven Fertigungsverfahrens.
Erfindungsgemäss unterscheiden sich die erste Struktur und die zweite Struktur, insbesondere unterscheiden sie sich in ihren mechanischen Eigenschaften.

Das additive Fertigungsverfahren kann ein Schmelzschichtungsverfahren, insbesondre Fused-Depostion-Modeling-Verfahren (FDM), ein Selektives-Lasersinter-Verfahren (SLS) oder ein Multi-Jet-Fusion-Verfahren (MJP) sein.

In einer bevorzugten Ausführungsform umfasst der Schritt der Erfassung des Modelles des Fusses und Unterschenkels die folgenden Teilschritte:
- Einstellung eines vordefinierten, gegebenen Winkels zwischen einer ersten Line und einer zweiten Line. Die erste Line wird durch den Knöchel des Benutzers und den Wadenbeinkopf definiert. Die zweite Line wird durch die Fusssohle des Benutzers definiert;
- Insbesondere Hochziehen der Zehen des Benutzers; und
- Erfassen des Fusses und des Unterschenkels.

Vorteilhaft erweist sich, dass durch die Einstellung des Winkels anhand der ersten Line und der zweiten Line unabhängig von der Form des Fuss und des Unterschenkels, insbesondere der Grösse des Wadenbeinmuskels, bei allen Menschen eine ähnliche Stellung erzeugt wird. Die Erfassung des Fusses und des Unterschenkels kann so in einer standardisierten Position durchgeführt werden. Abweichungen der zu erfassenden Daten auf Grund von unterschiedlichen Formen von Fuss oder Unterschenkel des Benutzers werden weitgehend vermieden.

In einer Ausführungsform liegt der vordefinierte Winkel zwischen 10 Grad und 30 Grad, 10 Grad und 20 Grad, 12 Grad und 18 Grad, bevorzugt zwischen 13 Grad und 15 Grad, besonders bevorzugt ist der gegebenen Winkel 14 Grad.

Das Hochziehen der Zehen erweist sich vorteilhaft, da sich so das Fussgewölbe aufbaut. Der Fuss ist dadurch in einer neutralen Position, in welcher sich eine klar definierte Spannlinie aufbaut. Weiter wird durch die erhöhte Spannung der Achillessehne das Fersenbein in eine neutrale Position gebracht, die Wadenbeinmuskulatur wird gedehnt und es ergibt sich so eine Standardposition, in welcher die Passform ausgemessen werden kann.

In einer bevorzugten Ausführungsform umfasst der Schritt der Erfassung des Modelles des Fusses und Unterschenkels im Teilschritt des Einstellens eines gegeben Winkels zwischen der ersten Linie und der zweiten Line auch das Ausrichten einer Kniemitte (Patellasehne) über einen zweiten Zehen neben einem grossen Zehen (Hallux).

Dies dient zur Korrektur von etwaiger Fehlstellungen der Beinachsen und ermöglicht wiederum das Ausmessen der Passform in einer Standardposition.

Die Erfassung des Fusses und des Unterschenkels wird so in einer standardisierten Position durchgeführt wird. Abweichung der zu erfassenden Daten durch unterschiedliche Stellungen des Benutzers werden weiter reduziert.

Die Erfindung wird im Folgenden anhand von Ausführungsbeispielen in Figuren weiter erläutert. Hierbei zeigen:
- Figur 1:: Eine schematische Darstellung eines Innenschuhs in einer ersten Ausführungsform,
- Figur 2a:: eine Seitenansicht der in Figur 1 gezeigten Ausführungsform des Innenschuhs,
- Figur 2b:: den Ausschnitts Y aus Figur 2a vergrössert und im Querschnitt,
- Figur 3a:: eine schematische Darstellung eines Aussenschuhs in einer ersten Ausführungsform,
- Figur 3b:: den Ausschnitts Z aus Figur 3a vergrössert und im Querschnitt,
- Figur 4:: eine schematische Darstellung des Aussenschuhs der Figur 3 mit einem nur teilweise aufgesetzten Deckel,
- Figur 5:: eine schematische Darstellung des Deckels aus Figur 3 und 4 in Seitenansicht,
- Figur 6:: eine schematische Darstellung eines Schuhs in einer ersten Ausführungsform,
- Figur 7:: eine schematische Darstellung der einzelnen Teile des Schuhs aus Figur 6 in einem teilweise zusammengefügten Zustand, insbesondere eine Schale des Aussenschuhs, den Innenschuh, sowie den Deckel des Aussenschuhs,
- Figur 8:: eine schematische Darstellung des Schuhs aus Figur 6 und 7 in einem weiteren, nicht vollständig zusammengeführten Zustand,
- Figur 9:: eine schematische Darstellung des Innenschuhs aus Figur 1 in einem Schnitt durch die Schnittebene A-A.

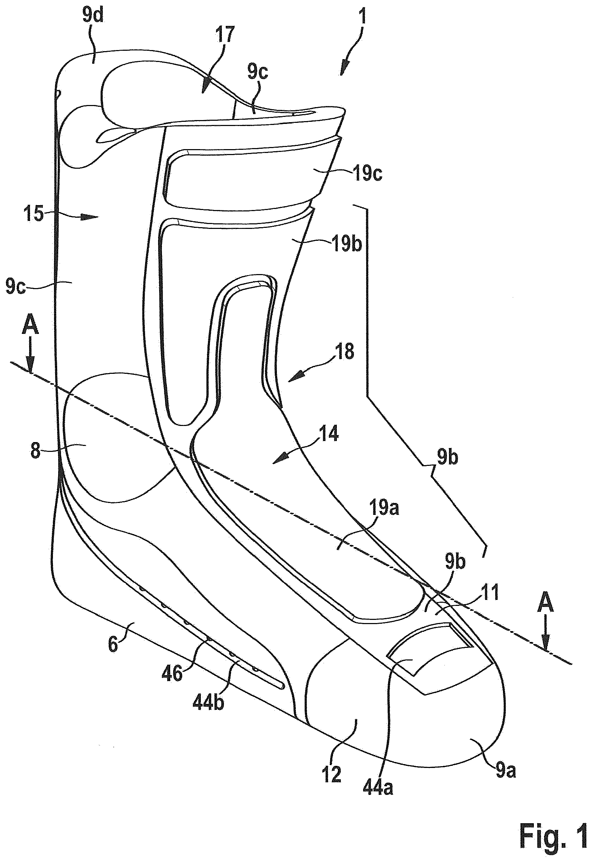

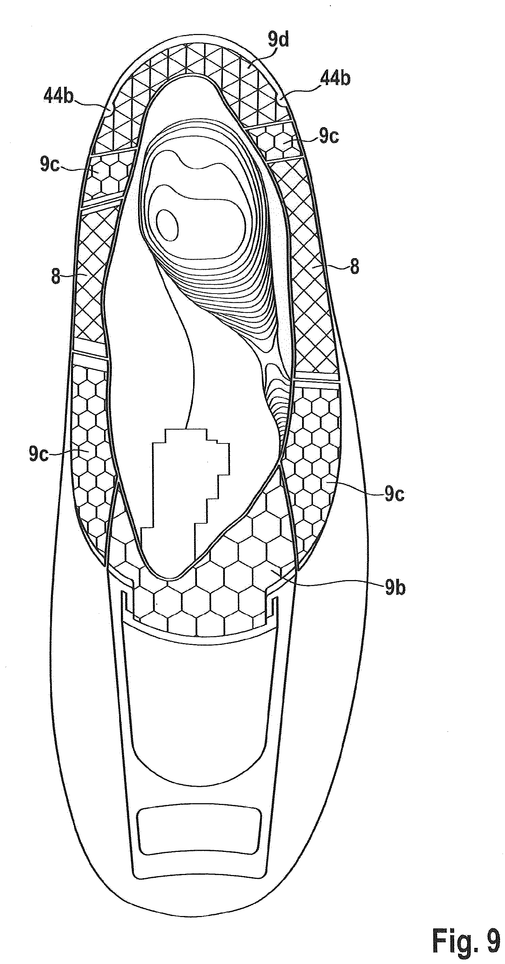

Figur 1 zeigt einen Innenschuh 1. Der Innenschuh 1 weist eine erste Zone 6 und eine zweite Zone 8 auf. Der Innenschuh 1 weist weitere Zonen 9a, 9b, 9c, 9d auf. Die erste Zone 6, die zweite Zone 8 und die weiteren Zonen 9a, 9b, 9c, 9d sind allesamt aus Polyurethan gebildet. Jedoch weist jede der erwähnten Zonen 6, 8, 9a, 9b, 9c, 9d andere mechanische Eigenschaften auf. Diese Eigenschaften werden durch eine Struktur, mit welcher das Polyurethan in dieser spezifischen Zone 6, 8, 9a, 9b, 9c angeordnet ist bestimmt. Das Polyurethan weist in der ersten Zone 6 eine erste Struktur 10 auf (siehe Figur 9). Das Polyurethan weist in der zweiten Zone 8 eine zweite Struktur 11 (siehe Figur 9) auf. Die Strukturen werden mittels Schmelzschichtungsverfahren (auch bekannt als "Fused Deposition Modeling") ausgebildet.

Eine Innenform 17 des Innenschuhs 1 wird durch die verschiedenen Zonen 6, 8, 9 gebildet. Die Innenform 17 ist auf einen Fuss eines zukünftigen Benutzers abgestimmt. Eine Aussenform 18 des Innenschuhs 1 wird ebenfalls durch die verschiedenen Zonen 6, 8, 9 gebildet. Diese Aussenform ist universal und nicht nutzerabhängig.

Die erste Zone 6 verläuft im Bereich der Fusssohle bis hin zur Ferse. Die zweite Zone 8verläuft seitlich des Fusses im Bereich eines Knöchels (Malleolus) . Eine erste, weitere Zone 9a verläuft in einem Bereich der Zehen 12. Eine zweite, weitere Zone 9b verläuft in einem Bereich des Fussrückens 14. Eine dritte, weitere Zone 9c verläuft vom Ende der ersten, weiteren Zone 9a im Bereich der Zehen 12 seitlich entlang des Fusses und des Unterschenkels. Die zweite Zone 8 wir von der Zone 9c umgeben. Eine vierte, weitere Zone 9d verläuft im Bereich der Wade. Diese Zonen unterscheiden sich in der Struktur des Aufbaus des Polyurethans, wodurch sich die Zonen auch in ihren mechanischen Eigenschaften unterscheiden können.

Die Aussenform 18 des Innenschuhs 1 weist im Bereich der zweiten, weiteren Zone 9b mehrere Vorsprünge 19a, 19b, 19c und eine Vertiefung 44a im Bereich oberhalb der Zehen 12 auf. Der Vorsprung 19a verläuft vom Ende der ersten, weiteren Zone 9a über den Fussrücken 14 bis hin in einen Bereich des Schienbeins 15. Die zweite, weitere Zone 9b weist anschliessend an den ersten Vorsprung 19a einen weiteren Vorsprung 19b auf, welcher ein Ende des ersten Vorsprungs 19a umgibt. Die zweite, weitere Zone 9b weist einen dritten Vorsprung 19c auf. Der dritte Vorsprung 19c verläuft am oberen Ende des Innenschuhs 1 im Bereich des Schienbeins 15 entlang des vorderen Schienbeins. Der Vorsprung 19a hat eine Hohe von 6 Millimeter. Die Vorsprünge 19b. 19c sind 3 Millimeter hoch.

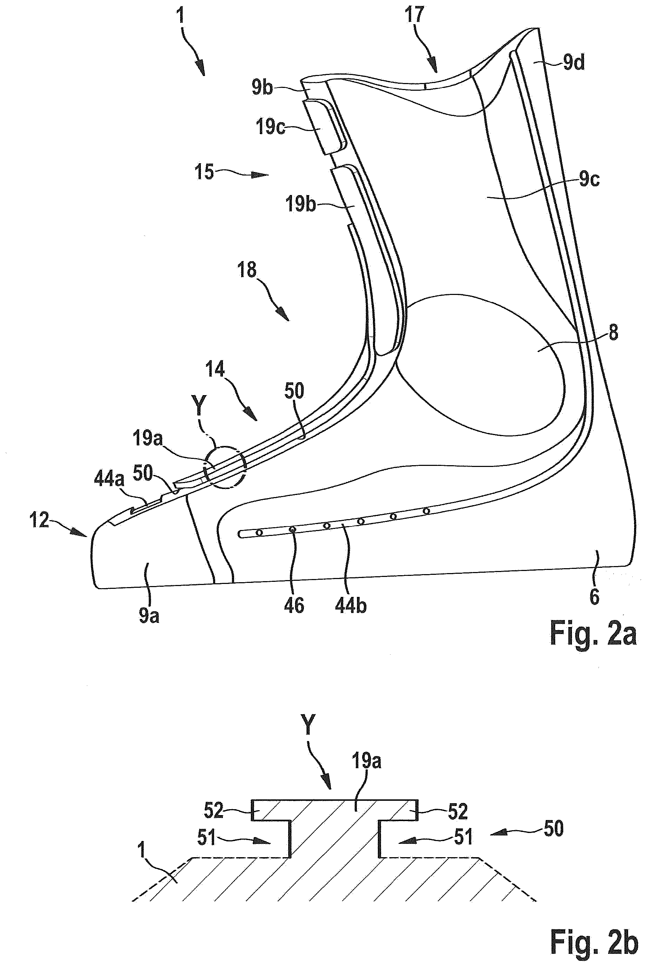

Die erste Zone 6 weist im Bereich der Fusssohle eine weitere Vertiefung 44b auf. Diese Vertiefung 44b verläuft in Form einer langen, dünnen Vertiefung 44b entlang der gesamten ersten, weiteren Zone 6 und in die vierte weitere Zone 9d (siehe Figur 2).

Die Vertiefung 44b weist im Bereich der ersten Zone 6 sechs Lüftungslöcher 46 auf. Die Lüftungslöcher 46 verlaufen von der äusseren Oberfläche des Innenschuhs bis durch die innere Oberfläche des Innenschuhs und bilden so eine Verbindung der Vertiefung 44b mit einem Innenraum des Innenschuhs 1, welcher durch die Innenform 17 gebildet wird. Die Lüftungslöcher 46 bilden so zusammen mit der Vertiefung 44b ein Entlüftungssystem zum Transport von feuchter Luft aus dem Hohlraum des Innenschuhs durch die Lüftungslöcher 46 über die Vertiefung 44b hin zum oberen Ende des Innenschuhs 1, wo die Luft an die Umgebung abgegeben wird. Luft steigt so vom Inneren des Innenschuhs 1 durch die Lüftungslöcher 46 in die Vertiefung 44b, welche als Kanal dient und die Luft entlang des Innenschuhs einer Öffnung führt. Die Vertiefung ist ca. 1.3 mm tief.

Figur 2a zeigt die Ausbildung der Vertiefung 44b am Anfang der ersten Zone 6, nahe beim Übergang zur ersten, weiteren Zone 9a im Bereich der Zehen 12. Weiter zeigt Figur 2 wie die Vorsprünge 19a, 19b, 19c in der zweiten, weiteren Zone 9b ausgebildet sind.

Es ist zu erkennen, dass sowohl die Vertiefung 44a als auch die Vorsprünge 19a, 19b, 19c kleine Vertiefungen beziehungsweise Vorsprünge an der Oberfläche des Aussenschuhs darstellen.
Des Weiteren ist erkennbar, dass sich die Vertiefung 44b von der ersten Zone 6 in die vierte, weitere Zone 9d bis hin zum oberen Ende des Innenschuhs 1 streckt.

Des Weiteren zeigt sie sechs Lüftungslöcher 46, welche in der Vertiefung 44b ausgebildet sind und den inneren Teil des Innenschuhs mit der Vertiefung 44b verbinden. Die Lüftungslöcher 46 sind im Teil der Vertiefung 44b ausgebildet, welcher an die weitere, dritte Zone 9c angrenzt und verlaufen in diesem ersten Drittel der Vertiefung 44b.

Der Vorsprung 19a weist eine Hinterschneidung 50 auf.

Figur 2b zeigt, dass sich die Hinterschneidung 50 aus einer Aussparung 51 im Vorsprung 19a entlang der Extremitäten dieses Vorsprungs 19a bildet. Es bildet sich so einen Vorsprungvorsatz 52, welcher den Vorsprung 19a über die Aussparung 51 hinweg fortsetzt.

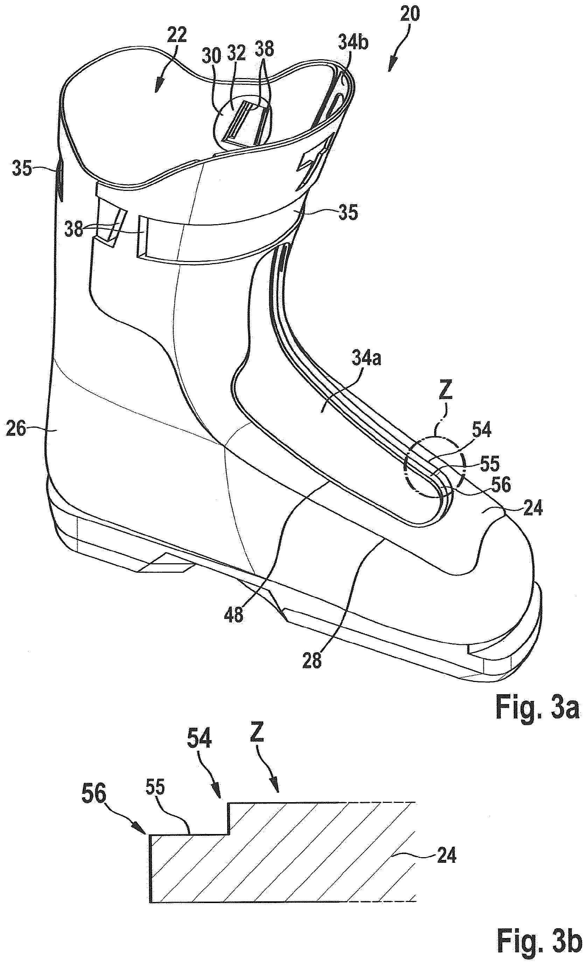

Figur 3a zeigt einen Aussenschuh 20. Der Aussenschuh 20 besteht aus einer Schale 26 sowie einem Deckel 24. Der Deckel 24 und die Schale 26 sind miteinander formschlüssig verbunden. Im verbunden Zustand definieren die Schale 26 und der Deckel 24 eine Innenform 22 des Aussenschuhs 20. Der Deckel 24 und die Schale 26 sind mit Wandstärken von 4.5 Millimeter ausgeführt.

Die formschlüssige Verbindung 28 des Deckels 24 mit der Aussenschale 26 wird durch eine Aussparung 30 in der Aussenoberfläche der Schale 26 sowie durch einen Vorsprung 32 auf der inneren Oberfläche des Deckels 24 erzeugt. Die Verbindung ist zweifach, jeweils an den Seiten des Schuhs ausgeführt. Dabei passt der Vorsprung 32 formschlüssig in die Vertiefung 30. Der Vorsprung weist eine Höhe von 4.5 Millimeter auf.
Im Vorsprung 32 sind zwei Verschlussöffnungen 38 ausgebildet. Die Verschlussöffnungen 38 verlaufen vertikal. Durch die Verschlussöffnungen 38 ist beispielsweise ein Verschlussband (nicht gezeigt) einführbar. Die Verschlussöffnungen 38 sind wiederum an beiden Seiten, das heisst auf beiden Vorsprüngen 32 ausgebildet. Der Deckel 24 weist also vier Verschlussöffnungen 38 auf.

Der Deckel 24 weist weiter eine äussere Vertiefung 35 auf. Diese äusseren Vertiefung 35 verläuft horizontal rund um den Deckel 24 auf der Höhe der Verschlussöffnungen 38. Die Vertiefung 35 ist zur Führung des Verschlussbands vorgesehen. Die Vertiefung 35 läuft auf der Schale 26 um die Schale 26 herum. Ist die Schale 26 und der Deckel 24, wie in Figur 3 gezeigt, ineinander gefügt, so ergibt sich eine um den Aussenschuh 20 laufende Vertiefung 35. Die Breite der Vertiefung ist auf die Breite des Verschlussbands ausgelegt, so dass das Verschlussband in geschlossenem Zustand in der Vertiefung 35 läuft und diese ausfüllt. Die Vertiefung 35 ist 1 Millimeter tief und 25mm breit.

Der Deckel 24 weist weiter eine erste Vertiefung 34a auf, welche vom Bereich der Zehen 12 über den Bereich des Fussrückens 14 bis hin in den Bereich des Schienbeins 15 verläuft. Die Vertiefung 34a ist als Aussparung ausgeführt. Sie ist als Gegenstück zum Vorsprung 19a (siehe Figur 1 und Figur 2) des Innenschuhs 1 ausgebildet und weist eine abgestufte Seitenkontur 48 auf.

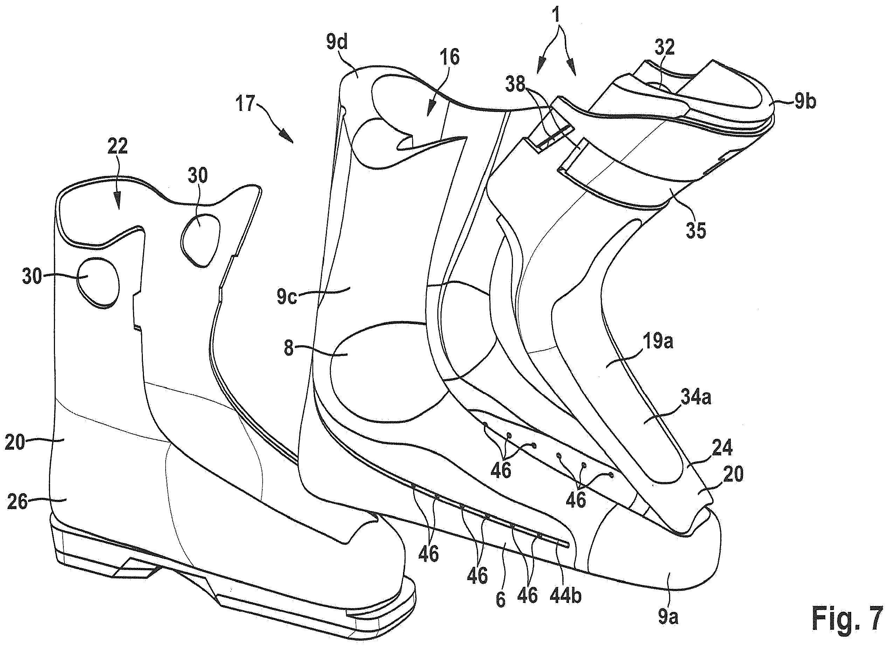

Die Kante 48 weist zur Verbindung des Deckels 24 mit dem Vorsprung 19a eine zur Hinterschneidung 50 passende Gegenform auf. Die Seitenkontur 48 kann so in die Hinterschneidung 50 eingeführt und dadurch am Vorsprung 19a befestigt werden (siehe Figur 7 und Figur 2b).

Die Seitenkontur 48 des Deckels 24 ist als doppelte Kante ausgeführt. Die Kontur 48 weist also eine erste Kante 52 zwischen der äusseren Oberfläche des Deckels 34a und einer Zwischenfläche 53 auf und eine zweite Kante 54 zwischen der Zwischenfläche 53 und der inneren Oberfläche des Deckels 24 auf. Es bildet sich so eine zweistufige Seitenkontur 48. Die Seitenkontur 48 ist auf die Hinterschneidung 50 des Vorsprung 19a abgestimmt und erlaubt eine formschlüssige Verbindung des Deckels 24 und des Innenschuhs 1.

Der Deckel 24 weist eine zweite Vertiefung 34b der Innenoberfläche des Deckels 24 auf. Diese weitere Vertiefung 34b verläuft im oberen Bereich des Deckels 24, das heisst nahe der Vertiefung 35.
Figur 3b zeigt einen Vergrösserung eines Abschnitts eines Querschnitt durch die Seitenkontur 48 des Deckels 24. Die Seitenkontur 48 weist die erste Kante 52 und die zweite Kante 54 auf. Zwischen den beiden Kanten bildet sich die Zwischenfläche 53. Die Seitenkontur 48 passt formschlüssig in die Hinterschneidung 50 des Vorsprungs 19a (siehe Figur 2b). Der Deckel 24 ist so formschlüssig mit dem Innenschuh 1 verbindbar.

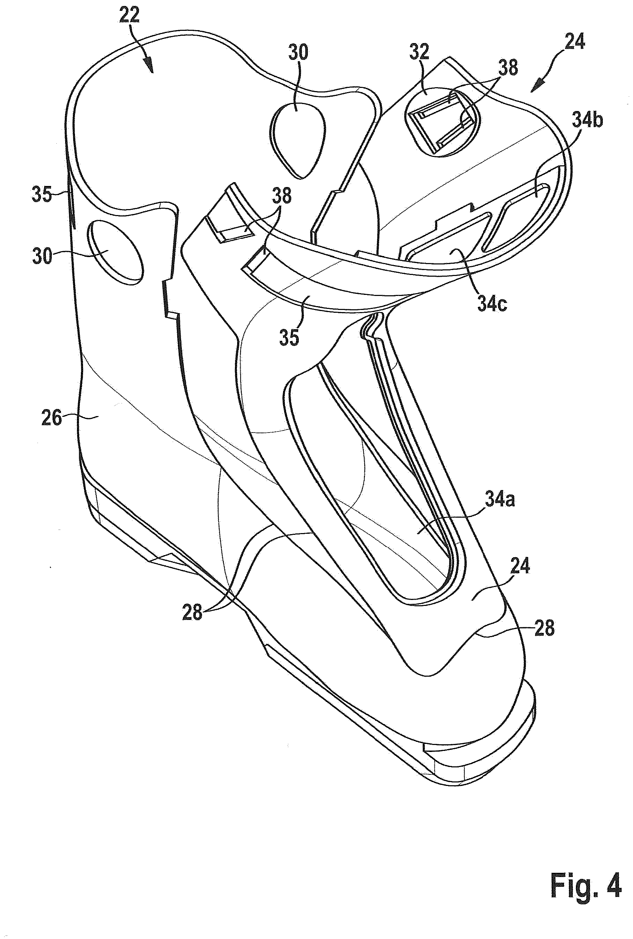

Figur 4 zeigt ebenfalls den Aussenschuh 20. Die formschlüssige Verbindung 28 des Deckels 24 und der Schale 26 ist in dieser Darstellung gelöst. So ist die ovale Form des Vorsprungs 32 erkennbar. Weiter ist die passende Gegenform der Vertiefung 30 auf der Schale 26 erkennbar.

Die Vertiefung 34b und eine weitere Vertiefung 34c der Innenoberfläche des Deckels 24 sind erkennbar und verlaufen von einem oberen Ende des Deckels 24 entlang der Innenseite des Deckels 24 Richtung des Bereichs des Fussrückens 14. Die Vertiefung 34b und 34c dienen der Verbindung des Innenschuhs 1 mit dem Deckel 24. Die Vertiefungen 34b, 34c sind je 3 Millimeter tief.

Der Deckel 24 ist durch Einführen in die Schale 26 mit dieser verbindbar und durch die Vertiefung 30 sowie den Vorsprung 32 in der zusammengeführten Position formschlüssig verbunden.

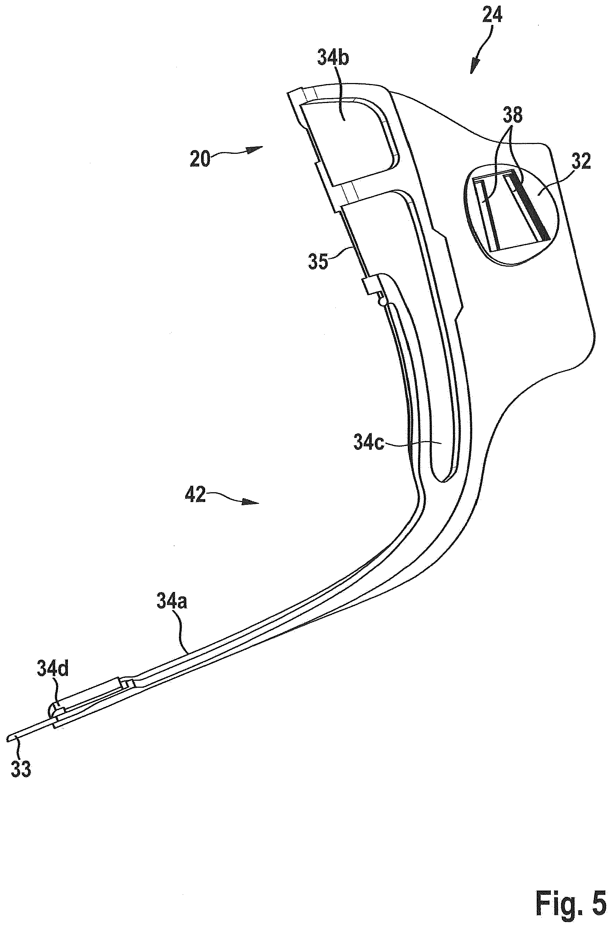

Figur 5 zeigt den Deckel 24 des Aussenschuhs. Der Deckel 24 weist am unteren Ende, das heisst im Bereich, wo dieser mit der Schale 26 und dem Innenschuh 1 verbindbar ist, einen Vertiefung 34d auf. Diese Vertiefung 34d ist zur formschlüssigen Verbindung 28 des Deckels 24 mit der Schale 26 ausgebildet. Die Form des Deckels 24 im Bereich der Vertiefung 34d ist zugleich so ausgebildet, dass sie in die Vertiefung 44 des Innenschuhs passt. Die Vertiefung 34d weist einen unteren Vorsatz 33 auf. Dieser ist so lange ausgebildet, dass sich der Deckel auch unter Krafteinwirkung während des Gebrauchs vom Innenschuh in Richtung Aussenschuh nicht von der Schale löst.

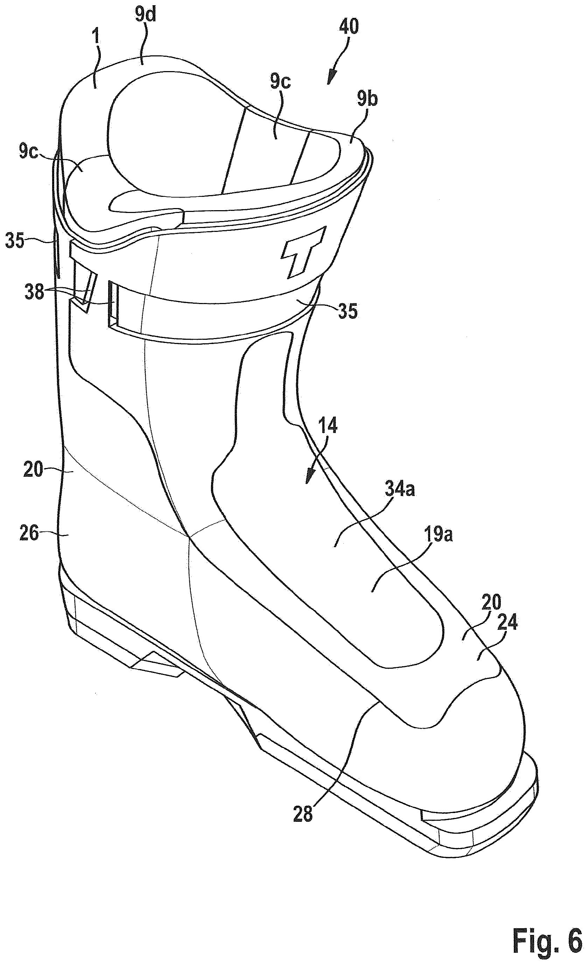

Figur 6 zeigt einen geschlossenen Schuh 40. Der Schuh 40 besteht aus dem Innenschuh 1 und dem Aussenschuh 20, wobei dieser wiederum aus der Schale 26 und dem Deckel 24 besteht. Der Deckel 24 verläuft im Bereich des Fussrückens 14. Der Deckel 24 verläuft so auf der zweiten, weiteren Zone 9b (siehe Figur 1 und Figur 2) des Innenschuhs 1.

Der Vorsprung 19 des Innenschuhs 1 passt formschlüssig in die Vertiefung 34 des Deckels 24. Auch die Verbindung des Deckels 24 mit der Schale 26 ist formschlüssig ausgebildet.

Die Verschlussöffnungen 38 im Deckel 24 erlauben einen Verschluss des Deckels 24 und der Schale 26 durch ein Verschlussband. Ein solches Verschlussband läuft in der Vertiefung 35 des Deckels 24. Das Verschlussband (nicht gezeigt) ist als Verschlussband mit Umlenkschnalle und Klettverschluss ausgebildet.

Die Zonen 9b und 9c sind voneinander getrennt. Der Abstand zwischen den beiden Zonen beträgt 0.5 Millimeter. Der Innenschuh wird in einem Stück durch ein additives Fertigungsverfahren hergestellt. Zur Bildung des Abstandes wird während der Herstellung an entsprechender Stelle ein Spalt, in welchem kein Polyurethan angebracht wird, vorgesehen. Die Zone 9c kann so als Schuhzunge fungieren.

Figur 7 zeigt eine Explosionsdarstellung des Schuhs 40. Insbesondere wird die formschlüssige Verbindung des Deckels 24 mit einem Teil des Innenschuhs 1 im Bereich der Zehen durch die Verwendung der Vertiefung 44 (siehe Figur 1 und Figur 2) gezeigt.

Figur 7 zeigt die Zone 9b, welche im Bereich des Fussrückens verläuft und ausschliesslich im Bereich der Fussspitze mit dem restlichen Innenschuh verbunden ist. Dadurch entsteht am Innenschuh eine bewegliche Schuhzunge. Die Schuhzunge kann so aus einer Gebrauchsposition (siehe Figur 1, 2 und 6), in welcher die Schuhzunge (Zone 9b) am Innenschuh 1 (Zone 9c und Zone 8) anliegt in eine Ein- beziehungsweise Ausstiegsposition (siehe Figur 7), in welcher die Zunge entlang ihrer Aussenkontur vom Innenschuh beanstandet ist, bewegt werden. Die Bewegung findet dabei um die Befestigung im Bereich der Zehen statt. Diese Befestigung wirkt also als eine Art Gelenk.

Der Deckel 24 ist mit der Zone 9b (Schuhzunge) verbunden. Die Kante 48 des Deckels 24 umgibt die Hinterschneidung 50 des Vorsprungs 19a der Zone 9b formschlüssig. Die Zone 9b und der Deckel 24 sind so miteinander verbunden.

Vier der sechs Lüftungslöcher 46 aus Figur 2 sind erkennbar. Es ist ersichtlich, dass die Lüftungslöcher 46 bis in den Innenraum des Innenschuhs vorstossen. Auf der gegenüberliegenden Seite des Innenschuhs ist eine weitere Vertiefung 44b ausgeprägt. Die weitere Vertiefung 44b weist wiederum sechs Lüftungslöcher 46 auf.

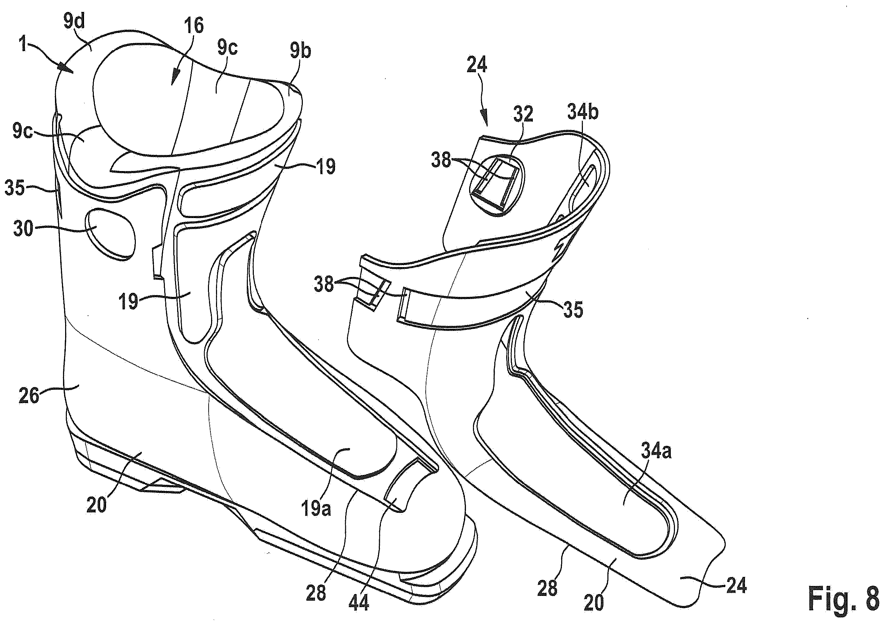

Figur 8 zeigt den Schuh 40 in einem Zustand, in welchem der Innenschuh 1 in die Schale 26 des Aussenschuhs 20 eingeführt ist, der Deckel 24 der Aussenschale 20 jedoch von der Schale 26 gelöst ist. Es ist erkennbar, dass der Deckel 24 in seiner Form so ausgebildet ist, dass er formschlüssig auf die Schale 26 und den Innenschuh 1, insbesondere die Vertiefung 44 aufgebracht werden kann.

Figur 9 zeigt die Struktur der zweiten Zone 8, der zweiten, weiteren Zone 9b, der dritten, weiteren Zone 9c und der vierten, weiteren Zone 9d. Die Strukturen unterscheiden sich allesamt. Die Struktur der zweiten Zone 8 weist im Schnitt eine Vielzahl von Quadraten auf. Die Struktur der zweiten, weiteren Zone 9b weist im Schnitt eine Vielzahl von Waben (Hexagonen) auf. Die dritte, weitere Zone 9c weist im Schnitt ebenfalls eine Vielzahl von Waben auf, wobei die Waben kleiner sind als diejenige der zweiten, weiteren Zone 9b. Die vierte, weitere Zone 9d weist im Schnitt eine Vielzahl von Dreiecken auf.

Die unterschiedlichen Strukturen führen zu unterschiedlichen mechanischen Eigenschaften, insbesondere zu unterschiedlichen Festigkeiten. Die zweite Zone 8 besitzt so eine Härte von 20 Shore A. Die zweite, weitere Zone 9b besitzt eine Härte von 25 Shore A. Die dritte, weitere Zone 9c besitzt eine Härte von 40 Shore A. Die vierte, weitere Zone 9d besitz eine Härte von 30 Shore A.

Weiter zeigt die Figur 9 in der vierten, weiteren Zone 9d, in der Nähe der Übergange zu den dritten, weiteren Zonen 9c je eine Vertiefung 44b. Die Vertiefung 44b dient als Teilluftkanal zur Abführung von Luft aus dem Innenschuh. Die Ergänzung des Teilkanals wird im Gebrauchszustand durch den Aussenschuh gebildet.

## Patentansprüche

1. Innenschuh (1), insbesondere Skischuh-Innenschuh, wobei der Innenschuh (1) wenigstens aus einem ersten Material (4) besteht, wobei
der Innenschuh (1) wenigstens eine erste Zone (6) und wenigstens eine zweite Zone (8) aufweist, welche beide aus dem erstem Material (4) gefertigt sind,
**dadurch gekennzeichnet, dass**
die erste Zone (6) und die zweite Zone (8) mit einer unterschiedlichen Rasterstruktur aufgebaut sind, wobei die erste Zone (6) und die zweite Zone (8) aufgrund der unterschiedlichen Rasterstruktur unterschiedliche mechanische Festigkeiten aufweisen und der Innenschuh in einem additiven Fertigungsverfahren gefertigt ist und wobei die Rasterstruktur eine Waben-, Balken-, Gitter-, 3D Gitter-, trigonale, tetragonale oder kubische, sphärische oder asphärische Struktur oder eine Kombination davon ist.

2. Innenschuh (1) nach Anspruch 1, wobei
der gesamte Innenschuh (1) im Wesentlichen aus dem ersten Material (4) besteht.

3. Innenschuh (1) nach einem der vorangehenden Ansprüchen, wobei das erste Material (4) Kunstharz oder ein Thermoplast, insbesondere ein Polyethylen, Polypropylen, Poliester, Polyactid, Acrylnitril-Butadien-StyrolCopolymerisat, Glycol modifiziertes PET oder ein thermoplastisches Elastomer, insbesondere eine Polyurethan oder ein Duroplast, insbesondere ein Silikon oder Photopolymer.

4. Innenschuh (1) nach einem der vorangehenden Ansprüche, wobei die erste Zone (6) im Bereich einer Fusssohle verläuft und wobei die zweite Zone (8) im Bereich eines Knöchels verläuft.

5. Innenschuh (1) nach einem der vorangehenden Ansprüche, wobei die Rasterstruktur des ersten Materials (4) in der ersten Zone (6) und der zweiten Zone (8) individuell wenigstens auf einen Benutzer angepasst sind.

6. Innenschuh (1) nach einem der vorangehenden Ansprüche, wobei der Innenschuh (1) in einem Gebrauchszustand einen Teil eines Unterschenkels (15) eines Benutzers umgibt.

7. Innenschuh (1) nach einem der vorangehenden Ansprüche, wobei eine Innenform (16) des Innenschuhs (1) individuell wenigstens auf einen Fuss, insbesondere auch auf einen Unterschenkel eines Benutzers angepasst ist.

8. Schuh (40) mit einem Innenschuh (1) nach einem der vorangehenden Ansprüche, wobei der Innenschuh (1) in einem Gebrauchszustand von einem Aussenschuh (20) umgeben ist und wobei eine Aussenform (17) des Innenschuhs (1) auf eine Innenform (22) des Aussenschuhs (20) passgenau abgestimmt ist.

9. Schuh (40) nach Anspruch 8, wobei
die Aussenform (17) des Innenschuhs (1) derart auf die Innenform (22) des Aussenschuhs (20) abgestimmt ist, dass diese formschlüssig ineinander passen.

10. Schuh (40), insbesondere Skischuh, umfassend einen Aussenschuh (20) und einen Innenschuh (1), insbesondere einen Innenschuh (1) nach einem der Ansprüchen 1 bis 7, wobei
der Aussenschuh (20) einen Deckel (24) und eine Schale (26) umfasst, wobei der Deckel (24) formschlüssig (28) in die Schale (26) einsetzbar ist.

11. Schuh (40) nach Anspruch 10, wobei
der Deckel (24) in Form einer Schuhzunge (42) ausgebildet ist, wobei sich der Deckel (24) in einem Gebrauchszustand über einen Bereich eines Fussrückens (14) und eines Schienbeins (15) eines Benutzers erstreckt.

12. Schuh (40) nach einem der Ansprüche 10 oder 11, wobei die Schale (26) im Bereich eines seitlichen Schafts auf der äusseren Oberfläche wenigstens eine Vertiefung (30), insbesondere eine Aussparung aufweist, wobei in einem Verschlusszustand der Deckel (24) die Schale (26) jeweils seitlich insbesondere bis über die Vertiefung (30) überlappt, wobei
der Deckel (24) wenigstens einen Vorsprung (32) aufweist, welcher formschlüssig in die Vertiefung (30) passt und wobei
der Vorsprung (32) so im Deckel (24) angeordnet ist, dass im Verschlusszustand der Vorsprung (32) in die Vertiefung (30) zu liegen kommt.

13. Schuh (40) nach Anspruch 12, wobei
die Vertiefung (30) eine ovale, kreisrunde oder polygonale Form aufweist.

14. Schuh (40) nach einem der Ansprüche 10 bis 13, wobei eine innere Oberfläche des Deckels (24) wenigstens eine Vertiefung (34), insbesondere eine Aussparung aufweist, wobei die äussere Oberfläche des Innenschuhs (1) an entsprechender Stelle einen Vorsprung (19) aufweist, so dass im Verschlusszustand der Vorsprung (19) in die Vertiefung (34) zu liegen kommt.

15. Schuh (40) nach einem der Ansprüche 10 bis 14, wobei der Aussenschuh verschliessbar ist, wobei in einer verschlossenen Position die Schale nicht vom Deckel lösbar ist.

16. Schuh (40) nach Anspruch 15, wobei der Aussenschuh (20) wenigstens eine Verschlussöffnung (38) zum Einführen eines Verschlussbandes umfasst.

17. Verfahren zur Herstellung eines Innenschuhs (1) nach einem der Ansprüche 1 bis 7, mit den folgenden Schritten:
Erfassung eines Modelles eines Fusses und /oder eines Unterschenkels eines Benutzers,
Bestimmung einer ersten Rasterstruktur (10) anhand des Modelles,
Bestimmung einer zweiten Rasterstruktur (11) anhand des Modelles,
Ausprägung der ersten Rasterstruktur (10) in einer ersten Zone (6) des Innenschuhs (1) durch Anordnung eines Materials (4) mittels eines additiven Fertigungsverfahren,
Ausprägung der zweiten Rasterstruktur (11) in einer zweiten Zone (8) des Innenschuhs (1) durch Anordnung des Materials (4) mittels des additiven Fertigungsverfahren, wobei
sich die erste Rasterstruktur (10) und die zweite Rasterstruktur (11) in ihren mechanischen Eigenschaften unterscheiden.

## Claims

1. Inner boot (1), in particular inner boot for a ski boot, wherein the inner boot (1) consists at least of a first material (4), wherein
the inner boot (1) has at least one first zone (6) and at least one second zone (8), which are both manufactured from the first material (4),
**characterized in that**
the first zone (6) and the second zone (8) are constructed with different unit-spacing structures, wherein the first zone (6) and the second zone (8) have different mechanical strengths on account of the different unit-spacing structures, and the inner boot is produced by additive manufacturing, and wherein the unit-spacing structure is a honeycomb, bar, grid, three-dimensional grid, trigonal, tetragonal or cubic, spherical or aspherical structure or a combination thereof.

2. Inner boot (1) according to Claim 1, wherein the entire inner boot (1) consists essentially of the first material (4).

3. Inner boot (1) according to either of the preceding claims, wherein the first material (4) is synthetic resin or a thermoplastic material, in particular a polyethylene, polypropylene, polyester, polyactide, acrylonitrile-butadiene-styrene copolymer, glycol-modified PET or a thermoplastic elastomer, in particular a polyurethane or a thermoset, in particular a silicone or photopolymer.

4. Inner boot (1) according to one of the preceding claims, wherein the first zone (6) runs in the region of a sole of the foot, and wherein the second zone (8) runs in the region of an ankle.

5. Inner boot (1) according to one of the preceding claims, wherein the unit-spacing structure of the first material (4) in the first zone (6) and the second zone (8) are adapted individually at least to one user.

6. Inner boot (1) according to one of the preceding claims, wherein, in a use state, the inner boot (1) surrounds part of a user's lower leg (15).

7. Inner boot (1) according to one of the preceding claims, wherein an inner shape (16) of the inner boot (1) is adapted individually at least to a user's foot, in particular also to a user's lower leg.

8. Boot (40) having an inner boot (1) according to one of the preceding claims, wherein, in a use state, the inner boot (1) is surrounded by an outer boot (20), and wherein an outer shape (17) of the inner boot (1) is matched precisely to an inner shape (22) of the outer boot (20).

9. Boot (40) according to Claim 8, wherein the outer shape (17) of the inner boot (1) is matched to the inner shape (22) of the outer boot (20) such that these fit one inside the other in a form-fitting manner.

10. Boot (40), in particular ski boot, comprising an outer boot (20) and an inner boot (1), in particular an inner boot (1) according to one of Claims 1 to 7, wherein the outer boot (20) comprises a cover (24) and a shell (26), wherein the cover (24) can be inserted into the shell (26) in a form-fitting manner (28).

11. Boot (40) according to Claim 10, wherein the cover (24) is in the form of a tongue (42), wherein, in a use state, the cover (24) extends over a region of an arch (14) of a user's foot and of his shin (15).

12. Boot (40) according to either of Claims 10 and 11, wherein, in the region of a lateral shaft, the shell (26) has at least one depression (30), in particular an aperture, on the outer surface, wherein, in a closure state, the cover (24) overlaps the shell (26) in each case laterally in particular so that it extends over the depression (30), wherein the cover (24) has at least one protrusion (32), which fits into the depression (30) in a form-fitting manner, and wherein the protrusion (32) is arranged in the cover (24) such that, in the closure state, the protrusion (32) ends up located in the depression (30).

13. Boot (40) according to Claim 12, wherein the depression (30) is oval, circular or polygonal.

14. Boot (40) according to one of Claims 10 to 13, wherein an inner surface of the cover (24) has at least one depression (34), in particular an aperture, wherein the outer surface of the inner boot (1) has a protrusion (19) at a corresponding location, and therefore, in the closure state, the protrusion (19) ends up located in the depression (34).

15. Boot (40) according to one of Claims 10 to 14, wherein the outer boot can be closed, wherein, in a closed position, the shell cannot be released from the cover.

16. Boot (40) according to Claim 15, wherein the outer boot (20) comprises at least one closure opening (38) for the introduction of a closure strap.

17. Method for producing an inner boot (1) according to one of Claims 1 to 7, having the following steps:
mapping a model of a user's foot and/or lower leg, determining a first unit-spacing structure (10) on the basis of the model,
determining a second unit-spacing structure (11) on the basis of the model,
realizing the first unit-spacing structure (10) in a first zone (6) of the inner boot (1) by arranging a material (4) by means of additive manufacturing,
realizing the second unit-spacing structure (11) in a second zone (8) of the inner boot (1) by arranging the material (4) by means of additive manufacturing, wherein the mechanical properties of the first unit-spacing structure (10) and the second unit-spacing structure (11) differ.

## Revendications

1. Chausson intérieur (1), en particulier chausson intérieur de chaussure de ski, le chausson intérieur (1) étant composé au moins d'un premier matériau (4), dans lequel
le chausson intérieur (1) présente au moins une première zone (6) et au moins une deuxième zone (8) qui sont toutes les deux fabriquées du premier matériau (4),
**caractérisé en ce que** la première zone (6) et la deuxième zone (8) sont réalisées avec une structure de trame différente, la première zone (6) et la deuxième zone (8) présentant des stabilités mécaniques différentes en raison de la structure de trame différente, et le chausson intérieur étant fabriqué selon un procédé de fabrication additive, et la structure de trame étant une structure en nid d'abeilles, en barres, de grille, de grille 3D, trigonale, tétragonale ou cubique, sphérique ou asphérique ou une combinaison de celles-ci.

2. Chausson intérieur (1) selon la revendication 1, dans lequel le chausson intérieur (1) tout entier est composé substantiellement du premier matériau (4).

3. Chausson intérieur (1) selon l'une quelconque des revendications précédentes, dans lequel le premier matériau (4) est une résine synthétique ou un thermoplastique, en particulier un polyéthylène, un polypropylène, un polyester, un polyactide, un copolymère d'acrylonitrile-styrène-butadiène, du PET modifié avec du glycol ou un élastomère thermoplastique, en particulier un polyuréthane ou un duroplaste, en particulier un silicone ou un photopolymère.

4. Chausson intérieur (1) selon l'une quelconque des revendications précédentes, dans lequel la première zone (6) s'étend au niveau de la plante du pied, et la deuxième zone (8) s'étend au niveau de la cheville.

5. Chausson intérieur (1) selon l'une quelconque des revendications précédentes, dans lequel la structure de trame du premier matériau (4) dans la première zone (6) et la deuxième zone (8) est adaptée individuellement au moins à un utilisateur.

6. Chausson intérieur (1) selon l'une quelconque des revendications précédentes, dans lequel, à l'état d'utilisation, le chausson intérieur (1) entoure une partie d'une jambe (15) d'un utilisateur.

7. Chausson intérieur (1) selon l'une quelconque des revendications précédentes, dans lequel une forme intérieure (16) du chausson intérieur (1) est adaptée individuellement au moins à un pied, en particulier aussi à une jambe, d'un utilisateur.

8. Chaussure (40) comprenant un chausson intérieur (1) selon l'une quelconque des revendications précédentes, dans laquelle, à l'état d'utilisation, le chausson intérieur (1) est entouré d'une chaussure extérieure (20), et dans laquelle une forme extérieure (17) du chausson intérieur (1) est adaptée sur mesure à une forme intérieure (22) de la chaussure extérieure (20) .

9. Chaussure (40) selon la revendication 8, dans laquelle la forme extérieure (17) du chausson intérieur (1) est adaptée à la forme intérieure (22) de la chaussure extérieure (20) de telle sorte qu'elles s'emboîtent par complémentarité de forme.

10. Chaussure (40), en particulier chaussure de ski, comprenant une chaussure extérieure (20) et un chausson intérieur (1), en particulier un chausson intérieur (1) selon l'une quelconque des revendications 1 à 7, dans laquelle
la chaussure extérieure (20) comprend un recouvrement (24) et une coque (26), le recouvrement (24) pouvant être inséré dans la coque (26) par complémentarité de forme (28).

11. Chaussure (40) selon la revendication 10, dans laquelle le recouvrement (24) est réalisé sous la forme d'une languette de chaussure (42), le recouvrement (24) s'étendant à l'état d'utilisation sur une zone d'un cou-de-pied (14) et d'un tibia (15) d'un utilisateur.

12. Chaussure (40) selon l'une quelconque des revendications 10 et 11, dans laquelle la coque (26) présente au moins un creux (30), en particulier un évidement, au niveau d'une tige latérale sur la surface extérieure, dans laquelle,
à l'état de fermeture, le recouvrement (24) recouvre la coque (26) respectivement sur le côté, en particulier au-delà du creux (30), dans laquelle
le recouvrement (24) présente au moins une saillie (32) qui s'adapte par complémentarité de forme dans le creux (30), et dans laquelle
la saillie (32) est disposée dans le couvercle (24) de telle sorte qu'à l'état de fermeture, la saillie (32) se retrouve dans le creux (30).

13. Chaussure (40) selon la revendication 12, dans laquelle le creux (30) présente une forme ovale, circulaire ou polygonale.

14. Chaussure (40) selon l'une quelconque des revendications 10 à 13, dans laquelle une surface intérieure du recouvrement (24) présente au moins un creux (34), en particulier un évidement, la surface extérieure du chausson intérieur (1) présentant une saillie (19) en un endroit adéquat, de sorte qu'à l'état de fermeture, la saillie (19) se retrouve dans le creux (34).

15. Chaussure (40) selon l'une quelconque des revendications 10 à 14, dans laquelle la chaussure extérieure peut être fermée, la coque ne pouvant pas être détachée du recouvrement dans une position fermée.

16. Chaussure (40) selon la revendication 15, dans laquelle la chaussure extérieure (20) comprend au moins une ouverture de fermeture (38) pour introduire une bande de fermeture.

17. Procédé de fabrication d'un chausson intérieur (1) selon l'une quelconque des revendications 1 à 7, comprenant les étapes suivantes consistant à :
saisir un modèle d'un pied et/ou d'une jambe d'un utilisateur,
déterminer une première structure de trame (10) à l'aide du modèle,
déterminer une deuxième structure de trame (11) à l'aide du modèle,
estamper la première structure de trame (10) dans une première zone (6) du chausson intérieur (1) par l'agencement d'un matériau (4) au moyen d'un procédé de fabrication additive,
estamper la deuxième structure de trame (11) dans une deuxième zone (8) du chausson intérieur (1) par l'agencement du matériau (4) au moyen du procédé de fabrication additive, dans lequel
la première structure de trame (10) et la deuxième structure de trame (11) se distinguent par leurs propriétés mécaniques.
